Europäisches Patentamt

European Patent Office

Office européen des brevets

(19)

(11) Veröffentlichungsnummer : **0 179 783**
**B1**

(12) **EUROPÄISCHE PATENTSCHRIFT**

(45) Veröffentlichungstag der Patentschrift :
17.05.89

(51) Int. Cl.⁴ : **G 11 B 3/44**

(21) Anmeldenummer : 85901438.3

(22) Anmeldetag : 29.03.85

(86) Internationale Anmeldenummer :
**PCT/EP 85/00134**

(87) Internationale Veröffentlichungsnummer :
**WO/8504509 (10.10.85 Gazette 85/22)**

(54) EINRICHTUNG ZUM SCHNEIDEN EINER INFORMATION IN EINEN METALLENEN, INSBESONDERE KUPFERNEN AUFZEICHNUNGSTRÄGER.

(30) Priorität : 02.04.84 DE 3412270

(43) Veröffentlichungstag der Anmeldung :
07.05.86 Patentblatt 86/19

(45) Bekanntmachung des Hinweises auf die Patenterteilung : 17.05.89 Patentblatt 89/20

(84) Benannte Vertragsstaaten :
**AT BE CH DE FR GB IT LI LU NL SE**

(56) Entgegenhaltungen :
DE–A– 2 319 407
DE–A– 2 319 407
DE–A– 2 548 263
DE–A– 2 811 888
DE–B– 1 180 156
FR–A– 2 231 471
US–A– 2 187 512
US–A– 2 530 284
US–A– 2 544 495
US–A– 3 184 242
US–A– 3 781 020
US–A– 3 877 705
RCA Review, Band 43, nr 1, März 1982, Princeton, N.J. (US) J. Guarracini et al. : "Micromachining VideoDisc grooves and signals"

(73) Patentinhaber : **DMM Mastertechnik GmbH für Informationsträger**
**Finckensteinallee 38**
**D-1000 Berlin 45 (DE)**

(72) Erfinder : **REDLICH, Horst**
**Plessstrasse 3a**
**D-1000 Berlin 37 (DE)**

(74) Vertreter : **Meyer, Ludgerus**
**Patentanwälte Meyer, Stach, Vonnemann Jungfernstieg 38**
**D-2000 Hamburg 36 (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Diamanten als Werkzeuge und als Abtaster für Schallplatten sind bekannt. Es ist auch bekannt, daß Diamanten harte und weichere Zonen aufweisen und daß ein falsch justierter Diamantabtaster schneller verschleißt als ein richtig justierter Abtaster. Es ist ferner bekannt, wie ein solcher Abtaster richtig zu justieren ist (DE-B-11 80 156). Danach sollen zwei einander gegenüberliegende harte Linien des Abtastdiamanten den Wandungen der Schallrille der Schallplatte zugewandt sein. Über die Verwendung von Diamanten für das Schneiden einer Information in eine Schallplatte oder in eine Vorstufe davon liegen keine entsprechenden speziellen Lehren vor. Solche Schneiddiamanten werden wie beim Abtaster unter Berücksichtigung der harten Zonen gefertigt. Sobald die Schneidkanten verschlissen sind, werden sie nachgeschliffen.

Beim Schneiden der Information in metallene Oberflächen hat es sich gezeigt, daß die nach den Lehren der Abtastdiamanten geschnittenen Schneiddiamanten relativ schnell verschleißen. Der Erfindung liegt die Aufgabe zugrunde, den Verschleiß von Schneid-Diamanten zu verringern.

Diese Aufgabe wird durch die im Anspruch 1 gekennzeichnete Erfindung gelöst. Weiterbildungen der Erfindung sind in den Unteransprüchen gekennzeichnet.

Der Erfindung liegt die Erkenntnis zugrunde, daß Diamanten, die unter Beachtung der bekannten Härtekriterien geschliffen wurden, beim Schneiden von metallenen Aufzeichnungsträgern dann schneller verschleißten, wenn sie unter einem für die Qualität der Aufzeichnung günstigen Anstellwinkel von z. B. 15° justiert wurden.

Im Prinzip besteht die Erfindung darin, für die Herstellung eines Schneiddiamanten die für Abtastdiamanten aufgestellte Lehre zu verlassen und einen Diamantkörper zu formen, dessen Schneidkanten selbst nicht im Zentrum der harten harten Zone liegen, sondern erst im eingebauten Zustand unter Berücksichtigung des Anstellwinkels der starken Beanspruchung großen Widerstand entgegensetzen.

Zur näheren Erläuterung der Erfindung wird im folgenden ein Ausführungsbeispiel anhand der Zeichnungen beschrieben. Diese zeigen in

Fig. 1 die bekannte Zuordnung von Kubus, Diamant-Oktaeder und Diamantkörper

Fig. 2 eine Draufsicht auf Fig. 1 mit den angedeuteten vier Härtezonen.

Fig. 3 eine Halterung für einen Diamantkörper, der aus dem Oktaeder gewonnen wurde unter Einhaltung der Härtezonen gemäß Fig. 2.

Fig. 4 eine Schneideinrichtung für Schallplatten mit einem Anstellwinkel für den Schneiddiamanten.

Fig. 5 den in den Fig. 1 und 2 dargestellten Diamantkörper mit Kanten optimal harter Beschaffenheit sowie hineingezeichnet den Diamantkörper gemäß der Erfindung.

Fig. 6 einen Diamantkörper gemäß der Erfindung mit Facetten.

Fig. 7 eine Seitenansicht zu Fig. 6.

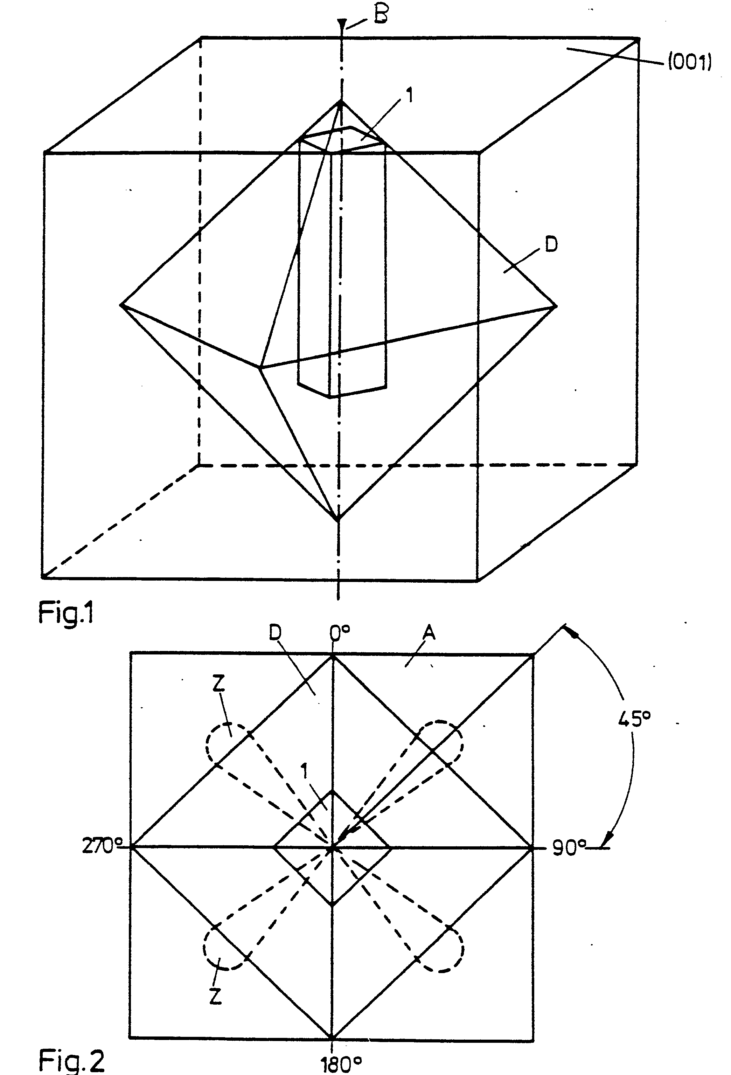

In Fig. 1 ist die Zuordnung eines Kubus A und eines Oktaeders D mit dem für einen Schneidstichel herauszuarbeitenden Diamantkörper 1 dargestellt, wie er z. B. in der DE-B-1.180.156 beschrieben ist. Es ist für Diamantabtaster bekannt (DE-A-2.319.407), bei der Betrachtung eines solchen Diamantoktaeders die Oberflächen mit sogenannten Millerschen Indizes zu bezeichnen, wie sie z. B. in dem Buch « Einführung in die Festkörperphysik » von Charles Kittel, Verlag Oldenbourg 5. Auflage Seiten 32-34 erläutert werden. Ordnet man den Kubus einem rechtwinkligen räumlichen Koordinatensystem x, y, z zu, so erhielte die obere waagerechte Ebene des Kubus die Indizes (001) und die Normale zu dieser Ebene wäre die vertikale Linie B in Fig. 1, die die obere und untere Spitze des Oktaeders miteinander verbindet.

Fig. 2 zeigt die Draufsicht auf Fig. 1 und die eingezeichnete Härteverteilung. Daraus ist leicht zu ersehen, daß der Diamant nur in relativ schmalen Zonen Z große Härte aufweist und als Werkzeug nur dort verschleißfest betrieben werden kann. Bereits eine kleine Abweichung bei der Justierung vermindert die Härte und damit die Lebensdauer des Werkzeugs.

Ein entsprechend dieser Lehre geschnittener Diamantkörper 1 müßte also die härtestmöglichen Schneidkanten aufweisen und einen relativ geringen Verschleiß haben.

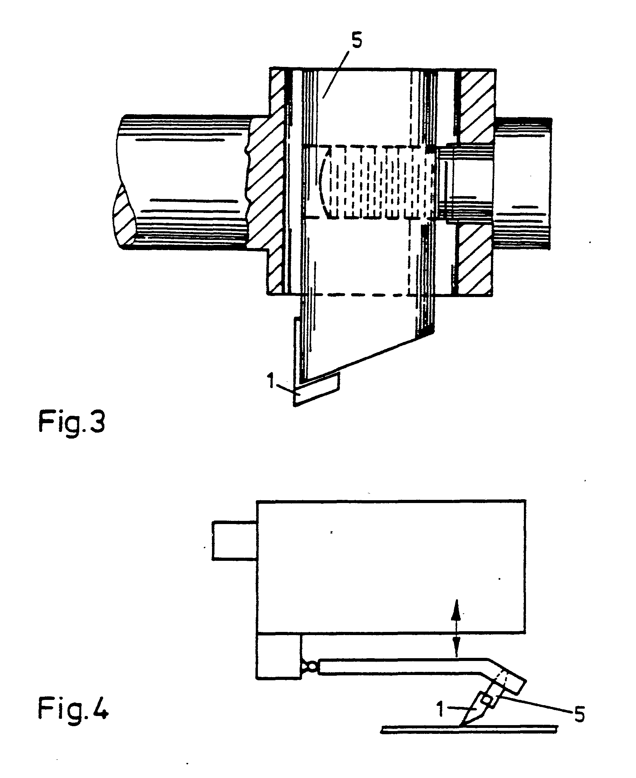

Fig. 3 zeigt eine Halterung 5 für einen Diamantkörper 1, der nach den beschriebenen Härtekriterien geschnitten wurde. Bei diesem Werkzeug ist der Diamantkörper 1 in der Halterung 5 so positioniert und befestigt, daß bei jedem Nachschleifen die einmal gewählten harten Zonen beibehalten werden. Ein derart positionierter Diamantkörper 1 hat sich für die Schneidtechnik bei Aufzeichnungsträgern bewährt, z. B. für das Schneiden von Bildinformationen in kupferne Aufzeichnungsträger. Bei Verwendung für die Aufzeichnung von Schallinformationen in kupferne Aufzeichnungsträger mit relativ großen Rillentiefen ergab sich ein wider Erwarten starkes Rauschen der Schallwiedergabe.

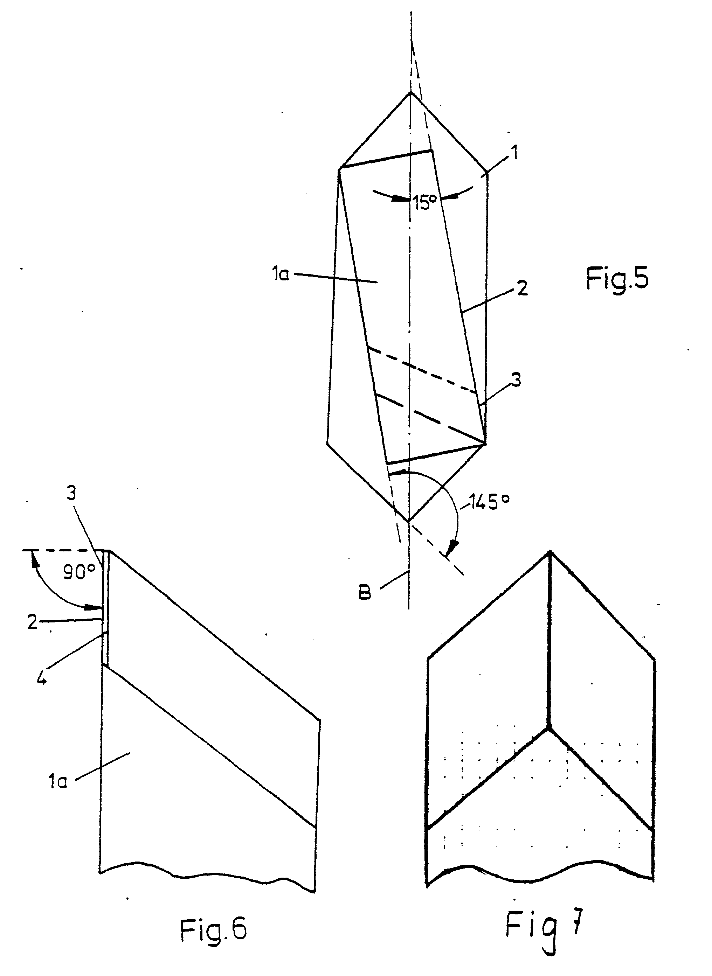

Fig. 4 zeigt eine Schneideinrichtung für Schallplatten mit einer Justierung des in Fig. 3 gezeigten Diamanthalters 5, mit der das Rauschen beträchtlich verringert werden konnte. Als besonders günstig erwies sich dabei ein Anstellwinkel für den Diamantkörper 1 von ca. 15°. Bei dem so optimierten Schneidgerät wurde nun ein relativ starker Verschleiß des Diamanten festgestellt. Dieser relativ starke Verschleiß des Diamantkörpers wurde zunächst auf die überaus starke Beanspruchung des Diamanten durch die Tiefe der zu schneidenden Rille bzw. auf die Stärke des zu schneidenden Spans zurückgeführt. Durch den Einsatz des in Fig. 5 gezeigten Diamantkörpers 1a kann jedoch die Verschleißfestigkeit für den Diamanten auch für die rauscharme Schallaufzeichnung in Kupfer verbessert werden.

Fig. 5 zeigt einen Diamantkörper 1a für die rauscharme Schallaufzeichnung in Kupferschichten. Der Diamantkörper 1a ist in den bisher üblichen Schnitt eines Diamantkörpers 1 hineingezeichnet. Der neue Schnitt ist so gewählt, daß die Brustfläche 2 bereits beim Diamantkörper 1a mit dem für den Schneidvorgang vorgesehenen Anstellwinkel herausgearbeitet ist.

Im justitierten Arbeitszustand sind die Kohlenstoffatome des Diamanten im Kristallgitter so angeordnet, daß sie in Schneidrichtung hintereinanderliegen und so der Beanspruchung beim Schneidvorgang den größten Widerstand entgegensetzen. Der Diamant wird also ganz bewußt entlang weniger harter Linien geschnitten und geschliffen, damit im Arbeitszustand im Effekt die Verschleißfestigkeit erreicht wird. Da diese Schneidkanten 3 nicht mit den natürlichen Kanten übereinstimmen, kann die richtige Lage auch nur anhand von Röntgenaufnahmen des Kristallgitters ermittelt werden. Der so geschnittene Diamantkörper wird wie in Fig. 3 und Dig. 4 justiert und betrieben.

Es has sich nun gezeigt, daß bei einer Formgebung und Justierung des Diamanten gemäß Fig. 5 zwar die Verschleißfestigkeit beim Betrieb als Schneideinrichtung für Schallplatten wesentlich verbessert werden kann, daß aber der Diamant zugleich in einer die Spaltbarkeit begünstigenden Weise betrieben wird. Das bedeutet, daß der Diamant bei stoßweiser Beanspruchung, wie es bei der Schallplattenaufzeichnung der Fall ist, sich etwa parallel zur Oberfläche des Schneidträgers spalten kann, wenn nur eine midroskopisch kleine Scharte vorhanden ist. Dadurch könnte die Lebensdauer des Diamanten für den Schneidvorgang wieder beträchtlich verkürzt werden. Um diesen gelegentlich auftretenden nachteiligen Effekt zu vermeiden und trotzdem den Diamanten in der für die Verringerung des Verschleißes bei kleinstem Rauschen der Schallwiedergabe vorteilhaften Weise betreiben zu können, wird gemäß Fig. 6 an die Schneidkante 3 eine Facette 4 angeschliffen. Facetten an Schneiddiamanten sind zwar bekannt, doch haben diese bekannten Facetten eine andere Aufgabe und auch eine andere Beschaffenheit. Bekannte Facetten dienen zur Glättung der zu bearbeitenden Oberfläche durch Drücken oder dergl und haben zur Brustfläche des Diamanten einen Winkel von mehr als 100° sowie eine Breite von mehr als 2 µ. Die erfindungsgemäße Facette 4 dagegen hat zur Brustfläche 2 des Diamanten einen Winkel von weniger als 100°, vorzugsweise 90° und eine Breite von weniger als 1 µ, insbesondere von etwa 0,5 µ. Die Aufgabe dieser Facette 4 besteht darin, das Enstehen bereits mikroskopisch kleiner Scharten zu vermeiden, die zur Spaltung des Diamanten führen könnten. Die Breite der Facette 4 soll so schmal sein, daß die Schneidfähigkeit nicht beeinträchtigt wird.

**Patentansprüche**

1. Einrichtung zum Schneiden einer Information in einen metallenen Aufzeichnungsträger mittels eines aus einem Rohdiamanten (natürlicher oder künstlich erzeugter Oktaederkristall) unter Berücksichtigung der Härte im Bereich bestimmter Orientierungslinien für die Schneidkante geschnittenen oder geschliffenen Diamantkörpers, insbesondere für die Schallplattentechnik, bei der der Diamantkörper (1) für den Schneidvorgang so justiert ist, daß seine Brustfläche (2) beim Schneiden unter einem Anstellwinkel von 5-20° betrieben wird, und daß der Diamantkörper (1) so geschliffen ist, daß seine Brustfläche (2) einen Winkel zu der Kristallrichtung (B) hat, die die beiden Oktaederspitzen verbindet, derart, daß beim Schneiden unter dem Anstellwinkel die Atome des Kristallgitters in Schneidrichtung hintereinander liegen und die Schneidkante (3) in optimaler Härterichtung (Z) beansprucht wird.

2. Einrichtung nach Anspruch 1, dadurch gekennzeichnet, daß die Schneidkante (3) mit einer angeschliffenen Facette (4) versehen ist, die zur Brustfläche (2) einen Winkel von 70°-100°, insbesondere von 90° hat, wodurch die für die Schneidqualität erforderliche Gleichnäßigkeit der Schneidkante (3) auch bei großer Beanspruchung über längere Zeit erhalten bleibt.

3. Einrichtung nach Anspruch 2, dadurch gekennzeichnet, daß die Facette (4) so schmal ausgebildet ist, daß die Schneidfähigkeit nicht beeinträchtigt wird und kein Poliereffekt durch Drücken oder dergleichen auftritt.

4. Einrichtung nach Anspruch 3, dadurch gekennzeichnet, daß die Facette (4) eine Breite von weniger als 0,5 µ hat.

5. Einrichtung nach Anspruch 1, 2 oder 3, dadurch gekennzeichnet, daß die Brustfläche (2) zur Kristallrichtung (B) einen Winkel von 15° hat.

**Claims**

1. Device for cutting a piece of information in a metal record support by means of a diamond body cut or ground from a rough diamond (natural or artificially produced octahedral crystal) taking account of the hardness in the region of particular orientation lines for the cutting edge, in particular for gramophone record technology, in which the diamond body (1) is adjusted for the cutting process in such a way that its front face (2) is at an angle of pitch of 5-20° during the cutting, and that the diamond body (1) is so ground that its front face (2) is angled relative to the crystal direction (B) connecting the two octahedron apices in such a way that during the cutting at the angle of pitch the atoms of the crystal lattice lie behind each other in the cutting direction and the cutting edge (3) is stressed in optimum hardness direction (Z).

2. Device according to Claim 1, characterised in that the cutting edge (3) is provided with a ground bevel (4) which has an angle of 70°-100°, in particular of 90°, to the front face (2), whereby the uniformity of the cutting edge (3) necessary for the cutting quality is maintained even under high stresses over a protracted period.

3. Device according to Claim 2, characterised in that the narrowness of the bevel (4) is such that the cutting ability is not affected and no polishing effect occurs by pressing or similar.

4. Device according to Claim 3, characterised in that the bevel (4) has a width of less than 0.5 μ.

5. Device according to Claim 1, 2 or 3, characterised in that the front face (2) has an angle of 15° to the crystal direction (B).

## Revendications

1. Dispositif pour former par découpage une information dans un support d'enregistrement métallique à l'aide d'un corps en diamant découpé ou taillé dans un diamant brut (cristal octaédrique naturel ou produit artificiellement) en tenant compte de la dureté au voisinage de lignes d'orientation déterminées pour l'arête de coupe, notamment dans le domaine des disques, et dans lequel le corps en diamant (1) est ajusté pour l'opération de coupe de telle sorte que sa face frontale (2) travaille, lors du découpage, sous un angle d'attaque de 5-20°, et le corps en diamant (1) est taillé de telle sorte que sa face frontale (2) fasse un angle tel par rapport à la direction (B) du cristal, qui passe par les deux pointes de l'octaèdre, que, lors du découpage exécuté sous l'angle d'attaque, les atomes du réseau cristallin soient situés les uns derrière les autres dans la direction de coupe et que l'arête de coupe (3) soit sollicitée dans la direction optimale de dureté (Z).

2. Dispositif selon la revendication 1, caractérisé en ce que l'arête de coupe (3) est pourvue d'une facette polie (4) qui fait par rapport à la face frontale (2) un angle de 70°-100°, en particulier de 90°, ce qui a pour effet que l'uniformité, nécessaire pour la qualité de coupe, de l'arête de coupe (3) reste conservée pendant une durée plus longue, même dans le cas de fortes sollicitations.

3. Dispositif selon la revendication 2, caractérisé en ce que la facette (4) est prévue suffisamment étroite pour que la capacité de coupe n'en soit pas affectée et qu'aucun effet de lissage dû à des pressions ou autres n'apparaisse.

4. Dispositif selon la revendication 3, caractérisé en ce que la facette (4) possède une largeur inférieure à 0,5 μ.

5. Dispositif selon la revendication 1, 2 ou 3, caractérisé en ce que la face frontale (2) fait un angle de 15° par rapport à la direction (B) du cristal.

Fig.1

Fig.2

5

1

Fig.3

Fig.4

1

5

15°

1

1a

2

3

Fig.5

145°

B

3

90°

2

4

1a

Fig.6

Fig 7